(19) Europäisches Patentamt
European Patent Office
Office européen des brevets

(11) **EP 2 865 092 B1**

(12) **EUROPÄISCHE PATENTSCHRIFT**

(45) Veröffentlichungstag und Bekanntmachung des Hinweises auf die Patenterteilung:
**08.06.2016 Patentblatt 2016/23**

(51) Int Cl.:
*H02M 7/5395* (2006.01)  *H02M 1/32* (2007.01)
*H02P 29/00* (2016.01)  *H02P 27/08* (2006.01)
*H02P 21/22* (2016.01)  *H02M 7/46* (2006.01)

(21) Anmeldenummer: **13717528.7**

(22) Anmeldetag: **22.04.2013**

(86) Internationale Anmeldenummer:
**PCT/EP2013/058307**

(87) Internationale Veröffentlichungsnummer:
**WO 2013/189629 (27.12.2013 Gazette 2013/52)**

(54) **VERFAHREN UND VORRICHTUNG ZUM ANSTEUERN EINES WECHSELRICHTERS**

METHOD AND DEVICE FOR CONTROLLING AN INVERTER

PROCÉDÉ ET DISPOSITIF DE COMMANDE D'UN ONDULEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2012 DE 102012210652**

(43) Veröffentlichungstag der Anmeldung:
**29.04.2015 Patentblatt 2015/18**

(73) Patentinhaber: **Robert Bosch GmbH
70442 Stuttgart (DE)**

(72) Erfinder:
• **DEFLORIO, Andrea
71672 Marbach am Neckar (DE)**
• **MERKEL, Tino
71701 Schwieberdingen (DE)**
• **SCHUSTER, Ulrich
70180 Stuttgart (DE)**
• **HIRSCH, Michele
73730 Esslingen (DE)**

(56) Entgegenhaltungen:
**DE-A1-102008 040 144    DE-T5- 10 393 516
US-A- 5 631 819**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft ein Verfahren zum Ansteuern eines Wechselrichters mittels Raumzeigermodulation, insbesondere zum Ansteuern einer elektrischen Maschine, wobei der Wechselrichter eine Mehrzahl von steuerbaren Schaltern aufweist und der dazu ausgebildet ist, einen mehrphasigen elektrischen Strom bereitzustellen, insbesondere um die elektrische Maschine mehrphasig mit elektrischem Strom zu versorgen, wobei ein Sollstromraumzeiger mit einem Sollphasenwinkel und einer Sollamplitude vorgegeben wird, wobei der Wechselrichter derart angesteuert wird, dass eine Mehrzahl von unterschiedlichen aufeinander folgenden Schaltzuständen der Schalter eingerichtet wird, um den elektrischen Strom in Form eines Stromraumzeigers bereitzustellen.

Die vorliegende Erfindung betrifft ferner eine Vorrichtung zum Ansteuern eines Wechselrichters, insbesondere zum Ansteuern einer elektrischen Maschine, wobei der Wechselrichter eine Mehrzahl von steuerbaren Schaltern aufweist, die dazu angeschlossen sind, einen mehrphasigen elektrischen Strom in Abhängigkeit eines Sollstromraumzeigers mit einem Sollphasenwinkel und einer Sollamplitude bereitzustellen, insbesondere um die elektrische Maschine mehrphasig zu bestromen, mit einem Steuergerät, das dazu ausgebildet ist, den Wechselrichter derart anzusteuern, dass der Wechselrichter eine Mehrzahl von aufeinander folgenden unterschiedlichen Schaltzuständen der Schalter annimmt, um den elektrischen Strom in Form eines Stromraumzeigers bereitzustellen.

Schließlich betrifft die vorliegende Erfindung einen Kraftfahrzeugantriebsstrang mit wenigstens einer elektrischen Maschine zum Bereitstellen von Antriebsleistung, einem Wechselrichter zum Ansteuern der elektrischen Maschine und mit einer Vorrichtung zum Ansteuern des Wechselrichters der oben beschriebenen Art.

Stand der Technik

Auf dem technischen Gebiet der Drehstromverbraucher im Allgemeinen und der elektrischen Drehstrommaschinen im Speziellen sind unterschiedliche Ansteuerungsverfahren bekannt. Dabei wird aktuell üblicherweise das Verfahren der Raumzeigermodulation zur Ansteuerung des Drehstromverbrauchers bevorzugt. Bei diesem Ansteuerungsverfahren wird ein Raumzeiger durch aufeinander folgende Einstellung von acht Grundspannungszeigern gebildet. Um die Strangspannung bereitzustellen, werden die Grundspannungszeiger pulsweitenmoduliert geschaltet, sodass eine entsprechende Ansteuerspannung generiert wird.

Bei den bekannten Ansteuerungsverfahren werden die elektrischen Verbraucher mittels eines Wechselrichters mit Leistungshalbleiterschaltern angesteuert. Die Einstellung der acht aufeinander folgenden Grundspannungszeiger zur Erzeugung des Spannungsraumzeigers wird durch abwechselndes Ein- und Ausschalten bestimmter Leistungshalbleiterschalter der Wechselrichter realisiert. Bei sehr geringen Rotationsgeschwindigkeiten des Raumzeigers beziehungsweise, sofern der Drehstromverbraucher eine elektrische Maschine ist, bei geringen Drehzahlen der angesteuerten elektrischen Maschinen werden einzelne der Leistungshalbleiterschalter sehr häufig bzw. sehr lange geschaltet und somit durch einen sehr lange bzw. sehr häufig fließenden elektrischen Strom thermisch belastet. Daher müssen die Leistungshalbleiterschalter für sehr lange Einschlatzeiten und für sehr große Ströme ausgelegt werden, wodurch der Wechselrichter im Allgemeinen technisch aufwändig wird.

Um einer, insbesondere thermischen, Überbelastung der Leistungshalbleiterschalter zu begegnen wird beispielsweise in der WO 2010/000548A2 vorgeschlagen, einen von zwei spannungsfrei schaltenden Schaltzuständen in bestimmten Pulsweitenmodulationsperioden entfallen zu lassen, um die Schaltverluste der Leistungshalbleiterschalter zu verringern.

Da die, insbesondere thermische, Belastung einzelner Leistungshalbleiterschalter des Wechselrichters abhängig von einem Phasenwinkel des bereitgestellten Stromraumzeigers ist bzw. einzelne der Leistungshalbleiterschalter des Wechselrichters für bestimmte Phasenwinkel des bereitgestellten Stromraumzeigers unterschiedlich belastet werden, wird beispielsweise in der DE 10393516 T1 vorgeschlagen, in bestimmten Winkelbereichen des bereitgestellten Stromraumzeigers einen bestimmten Nullvektor zu verwenden, um die Schaltverluste der Leistungshalbleiterschalter zu reduzieren.

Nachteilig dabei ist es, dass in bestimmten Ansteuerungssituationen, insbesondere bei sehr geringen Rotationsgeschwindigkeiten des Stromraumzeigers einzelne der Leistungshalbleiterschalter dauerhaft belastet werden und somit in bestimmten Situationen eine Überlastung einzelner der Leistungshalbleiterschalter nicht vermieden werden kann. Die US 5 631 819 offenbart eine Wechselrichteransteuerschaltung mit den Merkmalen der Oberbegriffe der Ansprüche 1 und 14.

Offenbarung der Erfindung

Erfindungsgemäß wird daher ein Verfahren zum Ansteuern eines Wechselrichters mittels Raumzeigermodulation der eingangs genannten Art bereitgestellt, wobei der Wechselrichter derart angesteuert wird, dass ein Stromraumzeiger mit einem Phasenwinkel bereitgestellt wird, der sich von dem Sollphasenwinkel unterscheidet, um die Schalter gemäß einem Belastungssollwert zu belasten.

Ferner wird daher erfindungsgemäß eine Vorrichtung zum Ansteuern eines Wechselrichters der eingangs genannten Art bereitgestellt, wobei das Steuergerät dazu ausgebildet ist, den Wechselrichter derart anzusteuern, dass der Stromraumzeiger mit einem Phasenwinkel bereitgestellt wird, der sich von dem Sollphasenwinkel unterscheidet, um die Schalter gemäß einem Belastungssollwert zu belasten.

Schließlich wird erfindungsgemäß ein Kraftfahrzeugantriebsstrang bereitgestellt mit wenigstens einer elektrischen Maschine zum Bereitstellen von Antriebsleistung, einem Wechselrichter zum Ansteuern der elektrischen Maschine und mit einer Vorrichtung zum Ansteuern des Wechselrichters der oben beschriebenen Art.

Vorteile der Erfindung

Dadurch, dass der Stromraumzeiger mit einem Phasenwinkel bereitgestellt wird, der sich von dem Sollphasenwinkel unterscheidet, kann einer der steuerbaren Schalter in bestimmten Situationen, in denen der steuerbare Schalter, insbesondere thermisch, überlastet wird oder überlastet zu werden droht, entlastet werden, indem ein Stromraumzeiger mit einem Phasenwinkel eingestellt wird, der den überlasteten steuerbaren Schalter entlastet und einen anderen steuerbaren Schalter stärker belastet. Dadurch kann die Belastung der steuerbaren Schalter variiert werden und somit der Wechselrichter gleichmäßiger belastet werden. Im Ergebnis können somit auch für kritische Phasenwinkel der angeforderten Stromraumzeiger die Schalter gemäß einem Belastungssollwert belastet werden. Somit können die steuerbaren Schalter im Allgemeinen für geringere Belastungswerte ausgelegt werden, wodurch der Wechselrichter im Allgemeinen technisch weniger aufwendig und kostengünstiger gefertigt werden kann. Ferner wird durch die gleichmäßigere Belastung der Schalter die Lebensdauer des Wechselrichters im Allgemeinen verlängert.

Vorzugsweise wird der Stromraumzeiger mit einer Amplitude bereitgestellt, die sich von der Sollamplitude unterscheidet.

Dadurch kann eine durch den geänderten Phasenwinkel abweichende Leistungsabgabe des Wechselrichters kompensiert werden.

Ferner ist es bevorzugt, wenn der Phasenwinkel und die Amplitude derart eingestellt werden, dass eine Leistungsabgabe identisch ist mit einer Leistungsabgabe entsprechend dem Sollphasenwinkel und der Sollamplitude.

Dadurch kann auch bei geändertem Phasenwinkel des Stromraumzeigers die Leistungsabgabe konstant gehalten werden, wodurch eine kontinuierliche Leistung durch den Wechselrichter bereitgestellt werden kann und keine Beeinträchtigung der angesteuerten Last auftritt.

Es ist weiterhin bevorzugt, wenn eine Abweichung des Phasenwinkels von dem Sollphasenwinkel in Abhängigkeit von dem Sollphasenwinkel des Stromraumzeigers eingestellt wird.

Dadurch kann für besondere Sollphasenwinkel, die einzelne der steuerbaren Schalter besonders belasten stärker oder weniger stark von dem Sollphasenwinkel abgewichen werden, wodurch eine stärkere oder weniger starke Entlastung erzielt werden kann.

Dabei ist es bevorzugt, wenn die Abweichung für unterschiedliche Sollphasenwinkel in einem Kennfeld gespeichert ist.

Dadurch kann mit geringem regelungstechnischen Aufwand der Phasenwinkel in optimaler Weise eingestellt werden.

Es ist weiterhin bevorzugt, wenn der Phasenwinkel in Abhängigkeit der Verluste von wenigstens einem der steuerbaren Schalter eingestellt wird.

Dadurch kann eine ungleichmäßige Belastung des Wechselrichters einfach und effektiv ausgeglichen werden.

Es ist weiterhin bevorzugt, wenn der Phasenwinkel stufenweise in Abhängigkeit des Sollphasenwinkels variiert wird.

Dadurch kann der regelungstechnische Aufwand weiter reduziert werden.

Es ist besonders bevorzugt, wenn der Phasenwinkel und der Belastungssollwert bestimmt werden, die so ermittelten Werte in einem Kennfeld abgelegt werden und der Wechselrichter entsprechend der abgelegten Werte angesteuert wird.

Dadurch kann der regelungstechnische Aufwand reduziert werden und die obere und untere Seite des Wechselrichters und gleichzeitig die einzelnen Phasen des Wechselrichters gleichmäßiger belastet werden.

Es ist alternativ bevorzugt, wenn der Phasenwinkel des Stromraumzeigers in Abhängigkeit von Kennfelddaten bestimmt wird und der Wechselrichter entsprechend angesteuert wird und wobei der Belastungssollwert in Abhängigkeit der entstehenden Verluste von wenigstens zwei der steuerbaren Schalter bestimmt wird.

Durch diese Neuberechnung des Belastungssollwerts kann auf individuelle Situationen reagiert werden.

Es ist weiterhin bevorzugt, wenn der Phasenwinkel des Stromraumzeigers in Abhängigkeit von Kennfelddaten bestimmt wird und der Wechselrichter entsprechend angesteuert wird und wobei der Belastungssollwert in Abhängigkeit der Temperaturen von wenigstens zwei der steuerbaren Schalter bestimmt wird.

Durch diese Neuberechnung des Belastungssollwerts kann mit einfachen Mitteln auf individuelle Situationen reagiert werden.

Es ist weiterhin bevorzugt, wenn der Belastungssollwert in Abhängigkeit der für den einzustellenden Spannungsraumzeiger maximal und minimal möglichen Verluste von wenigstens einem der Schalter, die dem hohen Versorgungsspannungspotential zugeordnet sind, und in Abhängigkeit der für den einzustellenden Spannungsraumzeiger maximal und minimal möglichen Verluste von wenigstens einem der Schalter, die dem niedrigen Versorgungsspannungspotential zugeordnet sind, bestimmt wird.

Dadurch kann die tatsächliche Belastung der steuerbaren Schalter bestimmt werden und die Verluste der beiden Seiten des Wechselrichters ausgeglichen bzw. aneinander angeglichen werden.

Es ist weiterhin bevorzugt, wenn der Stromraumzeiger mit dem Phasenwinkel bereitgestellt wird, um Freilaufdioden des Wechselrichters gemäß einem Belastungssollwert zu belasten.

Dadurch kann eine Belastung der Freilaufdioden des Wechselrichters ebenfalls gleichmäßig verteilt werden, wodurch die Freilaufdioden geringer dimensioniert werden können und die entsprechende Lebensdauer der Freilaufdioden erhöht ist.

Es ist weiterhin bevorzugt, wenn mittels des Wechselrichters eine elektrische Maschine angesteuert wird und der Sollstromraumzeiger in Abhängigkeit eines Rotorwinkels der elektrischen Maschine bestimmt wird.

Dadurch kann eine elektrische Maschine auch bei geringen Drehzahlen angesteuert werden, ohne dass einzelne der Schalter überlastet werden.

Dabei ist es besonders bevorzugt, wenn der Phasenwinkel und die Amplitude des Stromraumzeigers derart bestimmt werden, dass ein von der elektrischen Maschine abgegebenes Drehmoment identisch ist mit dem Drehmoment, das mittels des Sollstromraumzeigers abgegeben wird.

Dadurch kann die elektrische Maschine ein kontinuierliches Drehmoment bereitstellen und gleichzeitig einzelne der steuerbaren Schalter entlastet werden, ohne dass ein Leistungsverlust oder ein Stottern der elektrischen Maschine auftritt.

Im Ergebnis kann durch die vorliegende Erfindung auch bei geringen Rotationsfrequenzen des Stromraumzeigers der Wechselrichter gleichmäßig belastet werden, indem ein Stromraumzeiger eingestellt wird, dessen Phasenwinkel von dem Sollphasenwinkel abweicht, wobei insbesondere bei der Ansteuerung von elektrischen Maschinen trotz des geänderten Phasenwinkels ein konstantes Drehmoment bereitgestellt wird.

Es versteht sich, dass Merkmale, Eigenschaften und Vorteile des erfindungsgemäßen Verfahrens auch entsprechend auf die erfindungsgemäße Vorrichtung zutreffen bzw. anwendbar sind.

Kurze Beschreibung der Zeichnungen

Figur 1 zeigt in schematischer Form einen Wechselrichter zum Ansteuern eines Drehstromverbrauchers;

Figur 2 zeigt ein komplexes Zeigerdiagramm zur Erläuterung des Raumzeigermodulationsverfahrens zum Ansteuern des Wechselrichters eines Drehstromverbrauchers;

Figur 3 zeigt in schematischer Form einen Verlauf von drei Strangspannungen zum Einstellen unterschiedlicher Spannungsraumzeiger;

Figur 4 zeigt in schematischer Form einen Ablauf zum Bestimmen eines Belastungssollwertes der Schalter bzw. der Freilaufdioden des Wechselrichters;

Figur 5 zeigt in schematischer Form einen detaillierten Ablauf zum Bestimmen eines Belastungssollwertes auf der Grundlage von Temperaturmessungen oder -schätzungen;

Figur 6 zeigt in schematischer Form ein komplexes Zeigerdiagramm zum Einstellen eines Stromraumzeigers;

Figur 7 zeigt ein komplexes Zeigerdiagramm zum Einstellen eines Alternativstromraumzeigers und

Figur 8 zeigt ein komplexes Zeigerdiagramm zum Einstellen eines Stromraumzeigers mit einem Phasenwinkel von Null Grad.

Ausführungsformen der Erfindung

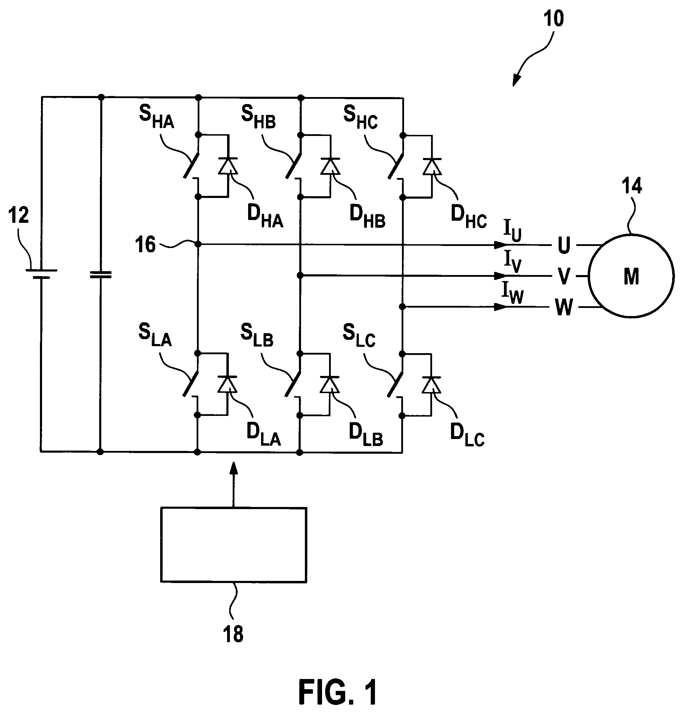

In Figur 1 ist ein Wechselrichter zum Ansteuern eines elektrischen Verbrauchers, insbesondere einer elektrischen Maschine schematisch dargestellt und allgemein mit 10 bezeichnet.

Der Wechselrichter 10 ist mit einer Gleichspannungsquelle 12 verbunden und dient dazu, den elektrischen Verbraucher 14, der in diesem Fall als elektrische Maschine 14 ausgebildet ist, dreiphasig zu bestromen. Der Wechselrichter weist drei Halbbrücken auf, die parallel zu der Gleichspannungsquelle 12 geschaltet sind und jeweils zwei steuerbare Schalter S aufweisen. Zwischen den Schaltern S ist jeweils ein Halbbrückenabgriff 16 gebildet, die jeweils mit einem Phasenleiter der Phasen U, V, W der elektrischen Maschine 14 verbunden sind.

Parallel zu den Schaltern S ist jeweils eine Freilaufdiode D geschaltet, die einen Stromfluss in entgegengesetzter Richtung ermöglicht.

In Figur 1 sind die Schalter S entsprechend der Phase U, V, W, die sie bereitstellen und entsprechend der Zuordnung zu einem hohen Potenzial der Gleichspannungsquelle 12 oder einem niedrigen Potenzial der Gleichspannungsquelle 12 mit SHA, SLA, SHB, SLB, SHC, SLC bezeichnet. Entsprechend sind die Freilaufdioden bezeichnet mit DHA, DLA, DHB, DLB, DHC, DLC.

Durch wechselndes Öffnen und Schließen der Schalter S wird zwischen den Phasenleitern U, V, W jeweils eine Ansteuerspannung angelegt, sodass sich entsprechend jeweils ein Phasenstrom IU, IV, IW einstellt, der die elektrische Maschine 14 antreibt. Der Wechselrichter 10 ist vorzugsweise mittels Halbleiterschaltern ausgebildet. Die Schalter des Wechselrichters werden mittels einer schematisch dargestellten Steuereinheit 18 wechselnd geöffnet und geschlossen, um die Phasenspannungen mit einem bestimmten Verlauf bereitzustellen, und einen rotierenden Spannungsraumzeiger bereitzustellen und die elektrische Maschine 14 entsprechend mit den Phasenströmen IU, IV, IW zu bestromen. Dabei wird der Spannungszeiger durch den Wechselrichter 10 bereitgestellt, woraufhin sich der Stromraumzeiger in Abhängigkeit der angesteuerten Last entsprechend einstellt.

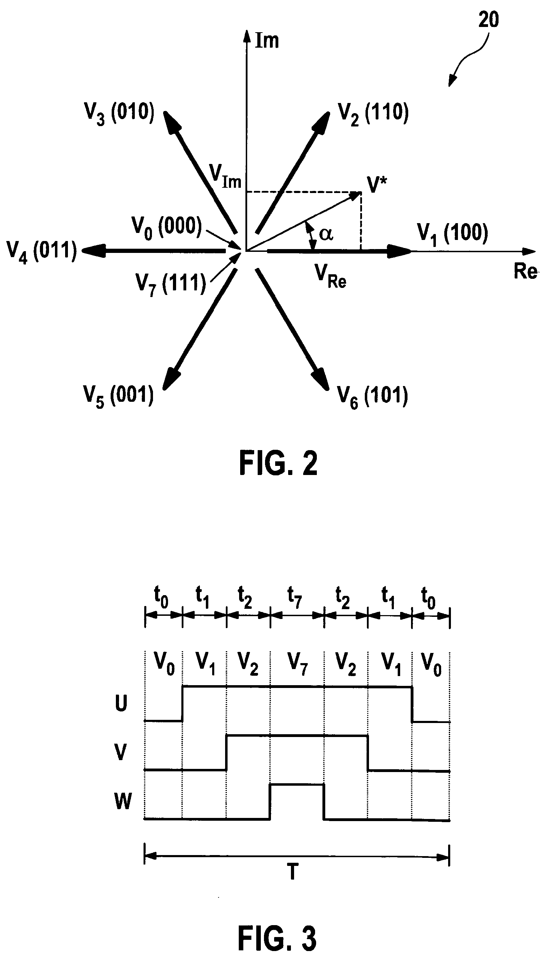

In Figur 2 ist ein komplexes Zeigerdiagramm zur Erläuterung der Raumzeigermodulation zum Ansteuern des elektrischen Verbrauchers 14 beziehungsweise der elektrischen Maschine 14 dargestellt und allgemein mit 20 bezeichnet.

In dem Zeigerdiagramm 20 ist ein Spannungszeiger V* mit einem Ansteuerungswinkel Alpha der elektrischen Maschine 14 dargestellt. In dem Zeigerdiagramm 20 sind ferner sechs Grundspannungszeiger V1, V2, V3, V4, V5, V6 dargestellt, die sich ergeben, wenn einzelne oder zwei der Schalter S des Wechselrichters 10 geschlossen werden und die elektrische Maschine entsprechend angesteuert wird. Um den Spannungszeiger V* mit einer maximalen Länge einzustellen, der in diesem Beispiel den Ansteuerwinkel alpha zwischen den Grundspannungszeigern V1 und V2 aufweist, wird dieser durch abwechselndes Ansteuern des Wechselrichters 10 entsprechend dem Grundspannungszeiger V1 und dem Grundspannungszeiger V2 realisiert. Die beiden Grundspannungszeiger V1, V2 werden abwechselnd eingestellt mit einer vordefinierten Schaltfrequenz, sodass sich bei gleicher Einschaltdauer der Grundspannungszeiger V1, V2 der Spannungszeiger V* mit einem Phasenwinkel von 30° ergibt. Sofern ein Spannungszeiger V* mit einem größeren Ansteuerungswinkel Alpha eingestellt werden muss, wird entsprechend die Einschaltdauer des Grundspannungszeigers V2 verlängert und die Einschaltdauer des Grundspannungszeigers V1 verkürzt. Somit lässt sich durch getaktetes Ansteuern der Schalter S des Wechselrichters 10 der Spannungsraumzeiger V* mit einem beliebigen Ansteuerwinkel Alpha realisieren.

Sofern der Spannungszeiger V*, wie in dem in Figur 2 dargestellten Fall mit einem geringeren Betrag (geringere Länge) als die Grundspannungsraumzeiger V1, V2 eingestellt werden soll, wird entsprechend ein Nullspannungszeiger V0, V7 eingestellt, bei dem die Schalter SHA, SHB, SHC auf der oberen Seite bzw. SLA, SLB, SLC auf der unteren Seite des Wechselrichters 10 geöffnet sind. Die jeweils anderen der Schalter S sind entsprechend geschlossen. Entsprechend kann der Spannungszeiger V* durch eine Kombination der Grundspannungsraumzeiger V1 und V2 und einem der Nullspannungszeiger V0, V7 realisiert werden.

In Abhängigkeit des Spannungsraumzeigers V* stellt sich ein Stromraumzeiger I* ein. Der Stromraumzeiger I* weist eine Amplitude und einen Phasenwinkel auf, die sich in Abhängigkeit des angesteuerten elektrischen Verbrauchers 14 einstellen. Der Phasenwinkel des Stromraumzeigers I* kann phasengleich mit dem Phasenwinkel α des Spannungsraumzeigers V* sein oder eine Phasenverschiebung aufweisen.

Zur Bestromung des elektrischen Verbrauchers 14 beziehungsweise der elektrischen Maschine 14 wird der Spannungsraumzeiger V* bereitgestellt, indem die unterschiedlichen Grundspannungsraumzeiger V1-V6 und die Nullspannungszeiger V0, V7 in einer schnellen Abfolge hintereinander eingestellt werden. Dadurch werden die unterschiedlichen Schalter S und die unterschiedlichen Freilaufdioden D des Wechselrichters 10 bei einem entsprechend schnell rotierenden Spannungsraumzeigers V* gleichmäßig belastet, insbesondere phasig gleichmäßiger belastet. Sofern die Rotationsfrequenz des Spannungsraumzeigers V* sehr gering oder null ist, zum Beispiel bei geringen Drehzahlen der elektrischen Maschine 10, werden die entsprechenden Schalter S und die Freilaufdioden D des Wechselrichters 10 einer Phase U, V, W über einen langen Zeitraum belastet, sodass eine Überlastung der entsprechenden Schalter S und der Freilaufdioden D auftreten kann und die Schalter S und die Freilaufdioden D des Wechselrichters 10 im Allgemeinen ungleichmäßig, insbesondere phasig ungleichmäßig belastet werden. Um bei eine Überlastung einzelner der Schalter S und Freilaufdioden D zu verhindern, müssen Maßnahmen ergriffen werden, um die Belastung auf unterschiedliche der Schalter S und der Freilaufdioden D zu verteilen.

In Figur 3 sind Verläufe der Phasenspannungen der drei Phasen U, V, W innerhalb einer pulsweiten Modulationsperiode T dargestellt, um die Grundspannungsraumzeiger V0, V1, V2, V7 nacheinander einzustellen. Innerhalb der pulsweiten Modulationsperiode T kann eine Einschaltdauer t0, t1, t2, t7 der einzelnen Grundspannungsraumzeiger V0, V1, V2, V7 variiert werden, um den Spannungsraumzeiger V* präzise einstellen zu können.

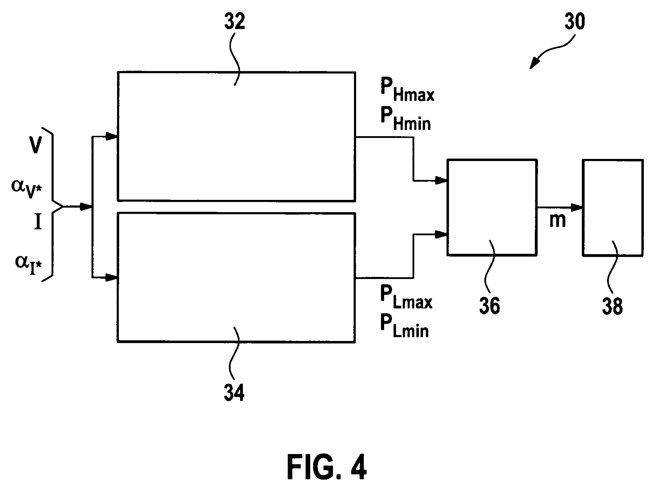

In Figur 4 ist die Bestimmung eines Belastungssollwertes m prinzipiell dargestellt und allgemein mit 30 bezeichnet. Mittels des Belastungssollwertes m wird grundsätzlich das Ziel verfolgt, die Schalter SHA, SHB, SHC, die einem hohen Spannungspotential der Spannungsquelle 12 zugeordnet sind und die Schalter SLA, SLB, SLC, die einem niedrigen Spannungspotential der Spannungsquelle 12 zugeordnet sind, gleich oder in möglichst ähnlicher Weise zu belasten. Dabei werden im Folgenden die Schalter SHA, SHB, SHC, die dem hohen Spannungspotential der Spannungsquelle 12 zugeordnet sind als obere Schalter SH bezeichnet und die Schalter SLA, SLB, SLC, die dem niedrigen Spannungspotential der Spannungsquelle 12 zugeordnet sind, als untere Schalter SL bezeichnet.

Als Eingangsgröße dienen der Betrag V des Spannungsraumzeigers V*, der Phasenwinkel Alpha_V des Spannungsraumzeigers V*, der Betrag I des Stromraumzeigers I* und der Phasenwinkel Alpha_I des Stromraumzeigers I*.

Zunächst wird einer der oberen Schalter SH bzw. eine der oberen Freilaufdioden DH ausgewählt, der bzw. die die maximalen Verluste der oberen Seite für den einzustellenden Spannungsraumzeiger V* aufweist. Für diesen Schalter SH bzw. diese Freilaufdiode DH werden die maximal möglichen Verluste P_Hmax für den einzustellenden Spannungsraumzeiger V* theoretisch bestimmt für den Fall, dass lediglich V7 als Nullspannungszeiger verwendet wird. Ferner werden die minimal möglichen Verluste P_Hmin dieses Schalters SH bzw. dieser Freilaufdiode DH für den einzustellenden Spannungsraumzeiger V* theoretisch bestimmt für den Fall, dass lediglich V0 als Nullspannungszeiger verwendet wird, wie es bei 32 gezeigt ist. Bei 34 wird entsprechend der untere Schalter SL bzw. die untere Freilaufdiode DL ausgewählt, der die maximalen Verluste der unteren Schalter SL bzw. der unteren Freilaufdioden DL für den einzustellenden Spannungsraumzeiger V* aufweist. Für diesen Schalter SL bzw. diese Freilaufdiode DL werden dann die maximal möglichen Verluste P_Lmax und die minimal möglichen Verluste P_Lmin für den einzustellenden Spannungsraumzeiger V* bestimmt für den Fall, dass lediglich V0 bzw. V7 als Nullspannungszeiger verwendet wird. Aus diesen Verlustwerten wird bei 36 ein neuer Belastungswert m berechnet und zwar mit der Formel:

$$m = \frac{P_{L\max} - P_{H\min}}{P_{H\max} - P_{H\min} + P_{L\max} - P_{L\min}}$$

Der so bestimmte Belastungswert m verteilt die thermische Belastung des Wechselrichters 10 auf die obere und der untere Seite derart, dass die Verluste auf der oberen Seite identisch mit den Verlusten der unteren Seite sind. Bei 38 werden die Einschaltzeiten t0 - t7 berechnet, um den ausgewählten Belastungswert m einzustellen und die Schalter S bzw. die Freilaufdioden D entsprechend gleichmäßiger zu belasten.

Da die Freilaufdioden D und die Schalter S unterschiedliche Belastungsgrenzen aufweisen, müssen die Verluste $P_D$, $P_S$ der Freilaufdioden D und der Schalter S aneinander angepasst bzw. faktorisiert werden, um miteinander verglichen werden zu können. Daher wird für die Freilaufdioden D eine Vergleichsverlustleistung $P_{DV}$ bestimmt, und zwar mit der Formel:

$$P_{DV} = c^* P_D$$

Wobei $P_{DV}$ die Vergleichsverlustleistung der Freilaufdioden, $P_D$ die Freilaufdiodenverluste, und der Faktor c eine Konstante sind. In einer besonderen Ausführungsform kann der Faktor c auch eine Funktion der Verlustleisung $P_D$ der Freilaufdioden D sein.

Ferner wird deutlich, dass die Verluste $P_D$, $P_S$ der Schalter S bzw. der Freilaufdioden D ausschließlich eine Funktion des Betrages V des Spannungsraumzeigers V*, des Phasenwinkels Alpha_V, des Betrages I des Stromraumzeigers I* und des Phasenwinkels Alpha_I sind.

In einer alternativen Ausführungsform des Verfahrens 30 werden anstatt der Verlustleistungen P der elektrische Strom I in dem jeweiligen Bauelement S, D und/oder das Quadrat des elektrischen Stroms $I^2$ in dem jeweiligen Bauelement S, D verwendet, um den Belastungssollwert m zu bestimmen.

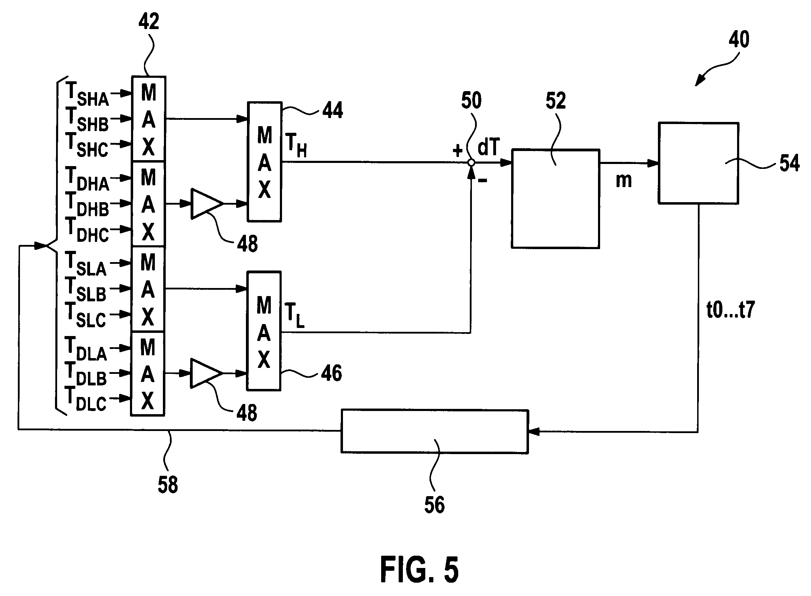

In Figur 5 ist ein Verfahren dargestellt, um den Belastungswert auf der Grundlage einer geschätzten oder gemessenen Temperatur $T_D$, $T_S$ der Schalter S und/oder der Freilaufdioden D zu bestimmen und einen neuen Belastungssollwert m zu ermitteln. In Figur 5 ist das Verfahren allgemein mit 40 bezeichnet.

Bei dem Verfahren 40 erfolgt im Betrieb die Bestimmung des Belastungssollwertes m in Abhängigkeit die Temperaturen der Schalter S bzw. der Freilaufdioden D. Als Eingangsgröße dienen allgemein die Temperaturen $T_D$, $T_S$ der Schalter S und der Freilaufdioden D. Bei 42 wird über die Temperaturen $T_D$, $T_S$ der am stärksten belastete obere Schalter SH, die am stärksten belastete obere Freilaufdiode DH, der am stärksten belastete untere Schalter SL und die am stärksten belastete untere Freilaufdiode DL ermittelt. Mit anderen Worten wird das jeweilige Bauelement ermittelt, das die höchste Temperatur aufweist. Aus diesen Temperaturen wird bei 44 und 46 die maximale Temperatur T_H der oberen Schalter und/oder der oberen Freilaufdioden bzw. aus den Verlusten der unteren Seite die maximale Temperatur T_L der unteren Seite ermittelt. Dabei wird die Temperatur $T_D$ der Freilaufdioden D faktorisiert um die Temperaturen der Schalter und der Freilaufdioden D vergleichen zu können, wie es bei 48 gezeigt ist. Mit anderen Worten, um die Temperaturen der Schalter S und der Freilaufdioden D vergleichen zu können, wird eine Vergleichstemperatur der Freilaufdioden D bestimmt mit der Formel:

$$T_{DV}=c^*T_D$$

wobei $T_{DV}$ die Vergleichstemperatur, $T_D$ die Temperatur der Freilaufdioden D und der Faktor c eine Konstante sind. In einer besonderen Ausführungsform kann der Faktor c auch eine Funktion der Verlustleisung $P_D$ der Freilaufdioden D sein. An einem Summationspunkt 50 wird die Differenz dT zwischen der maximalen Temperatur T_H der oberen Seite und der maximalen Temperatur T_L der unteren Seite ermittelt. Bei 52 wird in Abhängigkeit der Temperaturdifferenz dT ein geänderter Belastungssollwert m bestimmt, um die Temperaturdifferenz dT entsprechend auszugleichen. Sofern die Temperaturdifferenz dT > 0 ist, wird der Belastungssollwert m reduziert und sofern die Temperaturdifferenz dT < 0 ist, wird der Belastungssollwert m erhöht. In Abhängigkeit des so bestimmten Belastungssollwertes m werden bei 54 neue Einschaltdauer t0 - t7 für die folgende Pulsweitenmodulationsperiode T bestimmt. In Abhängigkeit der neuen Pulsweitenmodulationsperiode T werden geänderte Temperaturen $T_D$, $T_S$ der Schalter S und der Freilaufdioden D ermittelt, wie es bei 56 gezeigt ist und als neue Eingangsgrößen für das Verfahren 14 bereitgestellt, wie es durch die Rückführung 58 angedeutet ist. Dadurch kann auf der Grundlage der gemessenen oder geschätzten Temperatur der Schalter S und/oder der Freilaufdioden D für jede Pulsweitenmodulationsperiode T ein neuer Belastungssollwert m bestimmt werden, um die entsprechenden Schalter S und Freilaufdioden D gemäß dem neuen Belastungssollwert m gleichmäßiger zu belasten. Durch den Vergleich der Temperatur der Bauelemente der oberen Seite und der unteren Seite und durch die Anpassung des Belastungswertes m kann somit eine gleichmäßigere Belastung der Bauelemente der oberen Seite relativ zu den Bauelementen der unteren Seite erreicht werden.

In einer alternativen Ausführungsform des Verfahrens 40 werden zur Bestimmung des Belastungssollwertes m anstatt der Temperaturen der Bauelemente S, D Verlustwerte verwendet, die durch Integration der Verlustleistung des jeweiligen Bauelementes S, D oder durch Integration des elektrischen Stroms I in dem jeweiligen Bauelement S, D und/oder durch Integration des Quadrates des elektrischen Stroms $I^2$ in dem jeweiligen Bauelement S, D über einen vordefinierten Zeitraum ermittelt bzw. bestimmt werden.

In einer weiteren Ausführungsform des Verfahrens 40 werden zur Bestimmung des Belastungssollwertes m anstatt der Temperaturen der Bauelemente S, D die elektrischen Verluste P oder der elektrische Strom I in dem jeweiligen Bauelement S, D und/oder das Quadrat des elektrischen Strom $I^2$ in dem jeweiligen Bauelement S, D verwendet, die jeweils mittels eines Tiefpassfilter gefiltert werden.

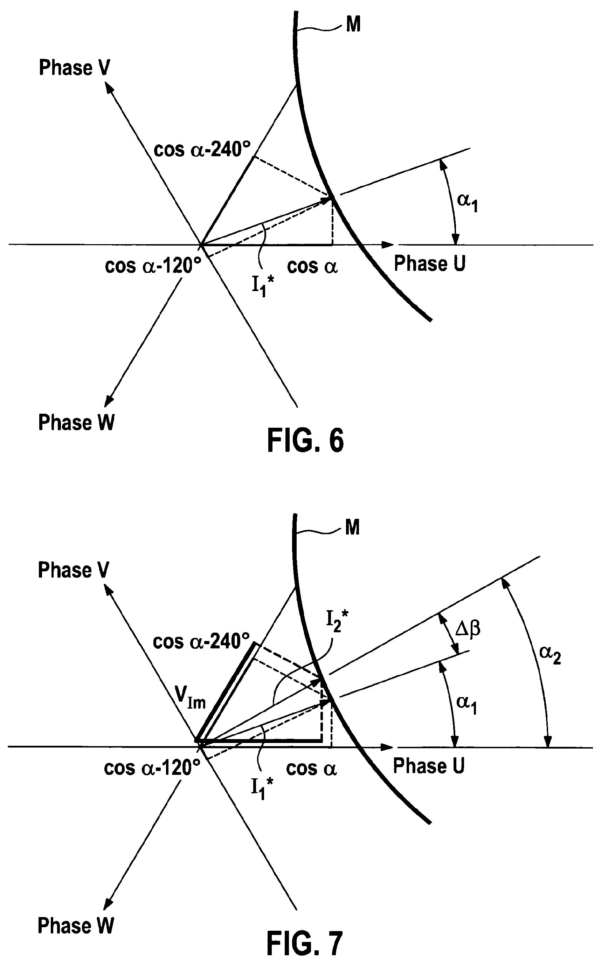

In Figur 6 ist ein komplexes Zeigerdiagramm des Stromraumzeigers I1* schematisch dargestellt. Der Stromraumzeiger I1* weist einen Betrag 11 und einen Phasenwinkel Alpha1 auf. Sofern der Wechselrichter 10, der den Stromraumzeiger I1* einstellt, zum Ansteuern der elektrischen Maschine 14 eingesetzt wird, wird durch den Stromraumzeiger I1* ein Drehmoment M bereitgestellt. In dem komplexen Zeigerdiagramm aus Figur 6 sind die einzelnen Phasen U, V, W mit einem Winkel von 120 Grad zueinander dargestellt. Eine Projektion des Stromraumzeigers I1* auf die entsprechenden Phasen U, V, W entspricht dabei dem Strom, der in den zugeordneten Schalter S eingestellt wird. Durch diese Projektion, die durch die gestrichelten Linien angedeutet ist, kann somit die Belastung der einzelnen Schalter S bzw. Freilaufdioden D direkt abgelesen werden. In dem dargestellten Beispiel aus Figur 6 wird somit der Schalter SHA durch die Phase U am stärksten belastet, wobei der Schalter SHC der Phase W weniger belastet wird, als der Schalter SHA und der Schalter SHB der Phase V sehr gering belastet wird.

In Figur 6 ist das bereitgestellte Drehmoment M der angeschlossenen elektrischen Maschine 14 als Kurve dargestellt, die gleichzeitig eine Kurve konstanten Drehmomentes M darstellt. Das von der elektrischen Maschine 14 abgegebene Drehmoment M ist eine Funktion eines Winkels Theta, um den der Stromzeiger I* dem elektrischen Rotorwinkel der elektrischen Maschine 14 vorauseilt und der Amplitude I des Stromraumzeigers I*: M = f(Theta, I). Daraus wird ersichtlich, dass das Drehmoment M, das von der elektrischen Maschine 14 abgegeben wird, konstant ist, sofern der Stromraumzeiger I1* der in Figur 6 dargestellten Linie konstanten Drehmoments M folgt.

Der Stromraumzeiger I1* wird so eingestellt, dass er einem elektrischen Rotorwinkel der elektrischen Maschine 14 vorauseilt, um mittels der elektrischen Maschine 14 das Drehmoment M bereitzustellen. Der Stromraumzeiger I1* eilt dem Rotor der elektrischen Maschine 14 um einen Winkel Theta $\geq$ 45 Grad voraus. Dies wird deutlich durch die Formel:

$$alpha\_I = alpha\_R + Theta,$$

wobei Alpha_I der Phasenwinkel des Stromraumzeigers I1*, Alpha_R der elektrische Winkel des Rotors der elektrischen Maschine 14 und Theta der Differenzwinkel ist.

Der Differenzwinkel Theta liegt üblicherweise zwischen 90 Grad und 180 Grad im motorischen Betrieb. Der Stromraumzeiger I1* bzw. der Sollstromraumzeiger I1* wird so eingestellt, dass der Wechselrichter 10 und die elektrische Maschine 14 für den elektrischen Rotorwinkel alpha_R einen optimalen Wirkungsgrad haben.

Eine Variation des Phasenwinkels alpha_I des Stromraumzeigers ist in einem komplexen Zeigerdiagramm in Figur 7 schematisch dargestellt.

In dem in Figur 7 dargestellten komplexen Zeigerdiagramm ist der Sollstromraumzeiger I1* mit dem Phasenwinkel alpha1 und dem Betrag 11 dargestellt und der Stromraumzeiger I2* mit dem Phasenwinkel alpha2 und dem Betrag 12. Der Sollstromraumzeiger I1* ist dabei der Stromraumzeiger, bei dem der Wechselrichter 10 und die elektrische Maschine 14 einen optimalen Wirkungsgrad aufweisen. Beide Stromraumzeiger I1*, I2* geben das gleiche Drehmoment M ab, da sie auf der Linie gleichen Drehmoments M verlaufen. Der Sollstromraumzeiger I1* ist identisch mit dem Stromzeiger I1* aus Figur 6. Der Stromraumzeiger I2* weist einen Phasenwinkel alpha2 auf, der größer ist, als der Phasenwinkel alpha1 des Sollstromraumzeigers I1*. Die Differenz zwischen den Phasenwinkeln alpha1 und alpha2 ist in Figur 7 als delta_beta bezeichnet. delta_beta kann in Abhängigkeit des Phasenwinkels alpha 1 unterschiedlich groß sein und schwanken maximal zwischen +30° und -30°. Durch die in Figur 7 dargestellte Projektion des Stromraumzeigers I2* auf die entsprechenden Phasenachsen der Phasen U, V, W wird deutlich, dass der Strom in der Phase U also in dem Schalter SHA gegenüber I1* reduziert ist und der Strom in der Phase W also dem Schalter SHC und der Freilaufdiode DLC erhöht ist. Insgesamt ist die Strombelastung durch den größeren Betrag des Stromraumzeigers I2* größer als bei dem Sollstromraumzeiger I1*, jedoch kann durch diese Maßnahme wie aus Figur 7 ersichtlich ist, die Belastung des am stärksten belasteten Schalters SHA und der Freilaufdiode DLA reduziert werden. Dadurch können Spitzenbelastungen der am stärksten belasteten Schalter S und auch der am stärksten belasteten Freilaufdioden D reduziert werden und die Belastung auf andere Schalter S oder Freilaufdioden D verteilt werden. Dadurch kann der Wechselrichter 10 phasig gleichmäßiger belastet werden. Da der Stromzeiger I2* der Linie gleichen Drehmoments M folgt, wird ein identisches Drehmoment M von der elektrischen Maschine 14 bereitgestellt, sodass diese Maßnahme für den Nutzer der elektrischen Maschine 14 keine Einschränkung darstellt und beispielsweise kein Stottern oder ein Einbruch des Drehmoments M auftritt. Durch die Einstellung des Stromraumzeigers I2*, der von dem Sollstromraumzeiger I1* abweicht, können die Verluste in den einzelnen Phasen U, V, W verteilt werden und somit eine Überlastung einzelner Bauteile einzelner Phasen vermieden werden. Mit anderen Worten kann somit eine gleichmäßigere Belastung der Phasen U, V, W erreicht werden.

Im Ergebnis kann somit durch das Bereitstellen eines alternativen Stromraumzeigers I2* mit einem von dem Sollphasenwinkel alpha1 abweichenden Phasenwinkel Alpha2 eine Reduktion des am meisten belasteten Schalters SHA und der Freilaufdiode DLA bzw. der am stärksten belasteten Phase U erzielt werden und somit der Wechselrichter 10 im Allgemeinen gleichmäßiger belastet werden.

Falls die Freilaufdioden D stark belastbar sind, kann delta-beta auch mit einem negativen Wert eingestellt werden, um einzelne der Schalter S zu entlasten. In der in Figur 7 dargestellten Ansteuerungssituation wird zunächst durch die Auswahl des Nullspannungszeigers V0 der Schalter SHA entlastet und somit die Freilaufdiode DLA stärker belastet. Dadurch werden auch die Schalter SLB, SLB stärker belastet. Für den Phasenwinkel alpha_1 wird dann die Freilaufdiode DLA am stärksten, der Schalter SLC weniger stark und der Schalter SLB sehr gering belastet. In dieser Situation kann durch einen Phasenwinkel alpha_2, der kleiner ist als alpha_1, also mit einem negativen Abweichungswinkel delta_beta, die Freilaufdiode DLA stärker belastet werden, wodurch allerdings der Schalter SLC entlastet und der Schalter SLB stärker belastet wird. Somit kann die Belastung der Schalter SLB und SLC gleichmäßiger verteilt werden. Dies erfolgt allerdings auf Kosten einer stärkeren Belastung der Freilaufdiode DLA.

Mit anderen Worten wird zunächst die Belastung von einem oberen Schalter SH auf eine untere Freilaufdiode DL verlagert und zwar durch Wahl einer geeigneten zeitlichen Verteilung der Nullspannungszeiger V0, V7 und dann wird die Belastung bei dem Nullspannungszeiger V0, V7 durch Einstellen des Abweichungswinkels delta-beta auf die Phasen U,V,W verteilt. So kann im Allgemeinen die Belastung der Schalter S und der Freilaufdioden D gleichmäßiger eingestellt werden.

Vorzugsweise wird das Verfahren 40 aus Fig. 5 mit dem Einstellen des alternativen Stromraumzeigers I2* aus Fig. 7 kombiniert. Dabei wird beispielsweise vor Ansteuerung des Wechselrichters 10 also etwa in dem Steuergerät 18 auf der Grundlage des Sollstromraumzeigers I1* nach dem Verfahren 30 ein optimierter Belastungssollwert m und gleichzeitig auch ein optimierter Stromraumzeiger I2* bestimmt. Diese Werte werden in einem Kennfeld abgespeichert und die elektrische Maschine 14 wird anhand der Werte des Kennfeldes angesteuert. Mit anderen Worten werden der Belastungssollwert m und der Stromraumzeiger I2* offline bestimmt und die elektrische Maschine entsprechend angesteuert.

Alternativ dazu kann der optimierte Stromraumzeiger I2* aus dem Kennfeld entnommen werden und der Belastungssollwert m im Betrieb der elektrischen Maschine 14 nach dem Verfahren 30 oder 40 auf der Grundlage von Messwerten oder Schätzwerten bestimmt werden und entsprechend kontinuierlich optimiert werden. Mit anderen Worten wird der Belastungssollwert m online bestimmt und angepasst.

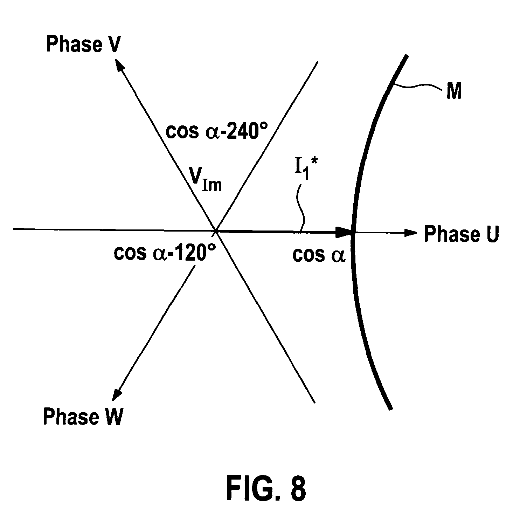

In Figur 8 ist ein komplexes Zeigerdiagramm entsprechend der Figuren 6 und 7 schematisch dargestellt für einen Sollstromraumzeiger I1* von Null Grad. In Figur 8 ist ferner die Linie gleichen Drehmoments M dargestellt. Die Linie gleichen Drehmoments M weist eine derartige Krümmung auf, dass eine Entlastung der Phase U bzw. eine Entlastung des entsprechenden Schalters SHA durch Bereitstellen eines Stromraumzeigers I2* mit einem abweichenden Phasenwinkel nicht möglich ist. Im Gegenteil würde durch einen größeren oder kleineren Phasenwinkel Alpha2 die Belastung des Schalters SHA gleich bleiben oder sogar zunehmen und ferner ein weiterer Schalter der Phase W oder der Phase V zusätzlich belastet werden. Entsprechende Verläufe der Linie gleichen Drehmoments ergeben sich für Phasenwinkel entsprechend der Achsen der Phasen U, V, W, also für die Winkel 0 Grad, 60 Grad, 120 Grad, 180 Grad, 240 Grad, 300 Grad usw. Für diese Phasenwinkel alpha1 ist eine Ansteuerung mittels eines abweichenden Phasenwinkels alpha2 nicht sinnvoll. Besonders sinnvoll ist eine Ansteuerung mittels des abweichenden Phasenwinkels Alpha2 für Phasenwinkel Alpha1 im Bereich von 30 Grad, 90 Grad, 150 Grad, usw.

Um den regelungstechnischen Aufwand zu reduzieren, können für bestimmte Sollphasenwinkel alpha1 Daten der Stromraumzeiger I2* in einem Kennfeld abgelegt werden. In dem Kennfeld kann auch berücksichtigt werden, dass für bestimmte Frequenzen des Stromsollraumzeigers I1* die Phasenwinkel des Sollstromraumzeigers I1* und die Phasenwinkel des Spannungsraumzeigers V1* voneinander abweichen können.

**Patentansprüche**

1. Verfahren zum Ansteuern eines Wechselrichters (10) mittels Raumzeigermodulation, insbesondere zum Ansteuern einer elektrischen Maschine (14), wobei der Wechselrichter (10) eine Mehrzahl von steuerbaren Schaltern (S) aufweist und der dazu ausgebildet ist, einen mehrphasigen elektrischen Strom (IU, IV, IW) bereitzustellen, insbesondere um die elektrische Maschine (14) mehrphasig mit elektrischem Strom (IU, IV, IW) zu versorgen, wobei ein Sollstromraumzeiger (I1*) mit einem Sollphasenwinkel (alpha1) und einer Sollamplitude (11) vorgegeben wird, wobei der Wechselrichter (10) derart angesteuert wird, dass eine Mehrzahl von unterschiedlichen aufeinanderfolgenden Schaltzuständen (V0 -V7) der Schalter (S) eingerichtet wird, um den elektrischen Strom (IU, IV, IW) in Form eines Stromraumzeigers (I*) bereitzustellen,
**dadurch gekennzeichnet, dass**
der Wechselrichter (10) derart angesteuert wird, dass der Stromraumzeiger (I2*) mit einem Phasenwinkel (alpha2) bereitgestellt wird, der sich von dem Sollphasenwinkel (alpha1) unterscheidet, um die Schalter (S) gemäß einem Belastungssollwert (m) zu belasten.

2. Verfahren nach Anspruch 1, wobei der Stromraumzeiger (I2*) mit einer Amplitude (12) bereitgestellt wird, die sich von der Sollamplitude (11) unterscheidet.

3. Verfahren nach Anspruch 1 oder 2, wobei der Phasenwinkel (alpha2) und die Amplitude (12) derart eingestellt werden, dass eine Leistungsabgabe identisch ist mit einer Leistungsabgabe entsprechend dem Sollphasenwinkel (alpha1) und der Sollamplitude (11).

4. Verfahren nach einem der Ansprüche 1 bis 3, wobei eine Abweichung (beta) des Phasenwinkels (alpha2) von dem Sollphasenwinkel (alpha1) in Abhängigkeit von dem Sollphasenwinkel (alpha1) des Sollstromraumzeigers (I1*) eingestellt wird.

5. Verfahren nach Anspruch 4, wobei die Abweichung (beta) für unterschiedliche Sollphasenwinkel (alpha1) in einem Kennfeld gespeichert ist.

6. Verfahren nach einem der Ansprüche 1 bis 5, wobei der Phasenwinkel (alpha2) in Abhängigkeit der Verluste von wenigstens einem der steuerbaren Schalter (S) eingestellt wird.

7. Verfahren nach einem der Ansprüche 1 bis 5, wobei der Phasenwinkel (alpha2) stufenweise in Abhängigkeit des Sollphasenwinkels (alpha1) variiert wird.

8. Verfahren nach einem der Ansprüche 1 bis 7, wobei der Phasenwinkel (alpha2) und der Belastungssollwert (m) bestimmt werden, die so ermittelten Werte in dem Kennfeld abgelegt werden und der Wechselrichter (10) in Abhängigkeit der abgelegten Werte des Kennfeldes angesteuert wird.

9. Verfahren nach einem der Ansprüche 1 bis 6, wobei der Phasenwinkel (alpha2) des Stromraumzeigers (I2*) in Abhängigkeit von Kennfelddaten bestimmt wird und der Wechselreichter (10) entsprechend angesteuert wird und wobei der Belastungssollwert (m) in Anhängigkeit der Verluste wenigstens zwei der steuerbaren Schalter (S) bestimmt wird.

10. Verfahren nach einem der Ansprüche 1 bis 9, wobei der Stromzeiger (I2*) mit dem Phasenwinkel (alpha2) bereitgestellt wird, um Freilaufdioden (D) gemäß einem Belastungssollwert (m) des Wechselrichters (10) zu belasten.

11. Verfahren nach einem der Ansprüche 1 bis 10, wobei der Belastungssollwert (m) in Abhängigkeit der maximal und minimal möglichen Verluste (P_Hmax, P_Hmin) von wenigstens einem der Schalter (SH), die dem hohen Versorgungsspannungspotential zugeordnet sind, und in Abhängigkeit der maximal und minimal möglichen Verluste (P_Lmax, P_Lmin) von wenigstens einem der Schalter (SL), die dem niedrigen Versorgungsspannungspotential zugeordnet sind, bestimmt wird.

12. Verfahren nach einem der Ansprüche 1 bis 11, wobei mittels des Wechselrichters (10) eine elektrische Maschine (14) angesteuert wird und der Sollstromraumzeiger (I1*) in Abhängigkeit eines Rotorwinkels (alpha_R) der elektrischen Maschine (14) bestimmt wird.

13. Verfahren nach Anspruch 12, wobei der Phasenwinkel (alpha2) und die Amplitude des Stromraumzeigers (I2*) derart bestimmt werden, dass ein von der elektrischen Maschine (14) abgegebenes Drehmoment (M) identisch ist mit dem Drehmoment (M), das mittels des Sollstromraumzeigers (I1*) abgegeben wird.

14. Vorrichtung (18) zum Ansteuern eines Wechselrichters (10), insbesondere zum Ansteuern einer elektrischen Maschine (14), wobei der Wechselrichter (10) eine Mehrzahl von steuerbaren Schaltern (S) aufweist, die dazu angeschlossen sind, einen mehrphasigen elektrischen Strom (IU, IV, IW) auf der Grundlage eines Sollstromraumzeigers (I1*) mit einem Sollphasenwinkel (alpha1) und einer Sollamplitude (I) bereitzustellen, insbesondere um die elektrische Maschine (14) mehrphasig zu bestromen, mit einem Steuergerät (18), das dazu ausgebildet ist, den Wechselrichter (10) derart anzusteuern, dass der Wechselrichter (10) eine Mehrzahl von aufeinanderfolgenden unterschiedlichen Schaltzuständen (V0-V7) der Schalter (S) annimmt, um den elektrischen Strom (IU, IV, IW) in Form eines Stromraumzeigers (I*) bereitzustellen,
**dadurch gekennzeichnet, dass**
das Steuergerät (18) dazu ausgebildet ist, den Wechselrichter (10) derart anzusteuern, dass der Stromraumzeiger (I2*) mit einem Phasenwinkel (alpha2) bereitgestellt wird, der sich von dem Sollphasenwinkel (alpha1) unterscheidet, um die Schalter (S) gemäß einem Belastungssollwert (m) zu belasten.

15. Kraftfahrzeugantriebsstrang mit wenigstens einer elektrischen Maschine (14) zum Bereitstellen von Antriebsleistung, einem Wechselrichter (10) zum Ansteuern der elektrischen Maschine (14) und mit einer Vorrichtung (18) zum Ansteuern des Wechselrichters nach Anspruch 14.

## Claims

1. Method for controlling an inverter (10) by means of space vector modulation, in particular for controlling an electrical machine (14), wherein the inverter (10) has a plurality of controllable switches (S) and is designed to provide a polyphase electric current (IU, IV, IW), in particular in order to supply the electrical machine (14) with electric current (IU, IV, IW) in a polyphase manner, wherein a nominal current space vector (I1*) having a nominal phase angle (alpha1) and a nominal amplitude (I1) is predefined, wherein the inverter (10) is controlled such that a plurality of different consecutive switching states (V0-V7) of the switches (S) are set in order to provide the electric current (IU, IV, IW) in the form of a current space vector (I1*),
**characterized in that**
the inverter (10) is controlled such that the current space vector (I2*) is provided with a phase angle (alpha2) which differs from the nominal phase angle (alpha1) in order to load the switches (S) according to a nominal loading value (m).

2. Method according to Claim 1, wherein the current space vector (I2*) is provided with an amplitude (I2) which differs from the nominal amplitude (I1).

3. Method according to Claim 1 or 2, wherein the phase angle (alpha2) and the amplitude (12) are set such that a power output is identical to a power output corresponding to the nominal phase angle (alpha1) and the nominal amplitude (I1).

4. Method according to any of Claims 1 to 3, wherein a deviation (beta) of the phase angle (alpha2) from the nominal phase angle (alpha1) is set as a function of the nominal phase angle (alpha1) of the nominal current space vector (I1*).

5. Method according to Claim 4, wherein the deviation (beta) for different nominal phase angles (alpha1) is stored in a characteristic map.

6. Method according to any of Claims 1 to 5, wherein the phase angle (alpha2) is set as a function of the losses of at least one of the controllable switches (S).

7. Method according to any of Claims 1 to 5, wherein the phase angle (alpha2) is varied in steps as a function of the nominal phase angle (alpha1).

8. Method according to any of Claims 1 to 7, wherein the phase angle (alpha2) and the nominal loading value (m) are determined, the values thus calculated are stored in the characteristic map and the inverter (10) is controlled on the basis of the stored values of the characteristic map.

9. Method according to any of Claims 1 to 6, wherein the phase angle (alpha2) of the current space vector (I2*) is determined on the basis of characteristic map data and the inverter (10) is correspondingly controlled, and wherein the nominal loading value (m) is determined as a function of the losses of at least two of the controllable switches (S).

10. Method according to any of Claims 1 to 9, wherein the current phasor (I2*) is provided with the phase angle (alpha2) in order to load freewheeling diodes (D) according to a nominal loading value (m) of the inverter (10).

11. Method according to any of Claims 1 to 10, wherein the nominal loading value (m) is determined as a function of the maximum and minimum possible losses (P_Hmax, P_Hmin) of at least one of the switches (SH) which are assigned to the high supply voltage potential and as a function of the maximum and minimum possible losses (P_Lmax, P_Lmin) of at least one of the switches (SL) which are assigned to the low supply voltage potential.

12. Method according to any of Claims 1 to 11, wherein an electrical machine (14) is controlled by means of the inverter (10) and the nominal current space vector (I1*) is determined as a function of a rotor angle (alpha_R) of the electrical machine.

13. Method according to Claim 12, wherein the phase angle (alpha2) and the amplitude of the current space vector (I2*) are determined such that a torque (M) output by the electrical machine (14) is identical to the torque (M) which is output by means of the nominal current space vector (I1*).

14. Device (18) for controlling an inverter (10), in particular for controlling an electrical machine (14), wherein the inverter (10) has a plurality of controllable switches (S) which are connected in order to provide a polyphase electric current (IU, IV, IW) on the basis of a nominal current space vector (I1*) having a nominal phase angle (alpha1) and a nominal amplitude (I), in particular to energize the electrical machine (14) in a polyphase manner, having a control device (18) which is designed to control the inverter (10) such that the switches (S) of the inverter (10) assume a plurality of consecutive different switching states (V0-V7) in order to provide the electric current (IU, IV, IW) in the form of a current space vector (I*).
**characterized in that**
the control device (18) is designed to control the inverter (10) such that the current space vector (I2*) is provided with a phase angle (alpha2) which differs from the nominal phase angle (alpha1) in order to load the switches (S) according to a nominal loading value (m).

15. Motor vehicle drivetrain having at least one electrical machine (14) for providing drive power, an inverter (10) for controlling the electrical machine (14) and having a device (18) for controlling the inverter according to claim 14.

## Revendications

1. Procédé d'excitation d'un onduleur (10) au moyen de la modulation du vecteur d'espace, notamment d'excitation d'une machine électrique (14), l'onduleur (10) possédant une pluralité de commutateurs (S) commandables et étant configuré pour fournir un courant électrique multiphasé (IU, IV, IW), notamment pour alimenter la machine électrique (14) en courant électrique (IU, IV, IW) sur plusieurs phases, un vecteur d'espace de courant de consigne (I1*) ayant un angle de phase de consigne (alpha1) et une amplitude de consigne (I1) étant prédéfini, l'onduleur (10) étant excité de telle sorte qu'une pluralité d'états de commutation (V0-V7) successifs différents des commutateurs (S) est établie afin de fournir le courant électrique (IU, IV, IW) sous la forme d'un vecteur d'espace de courant (I*),
**caractérisé en ce que**
l'onduleur (10) est excité de telle sorte que le vecteur d'espace de courant (I2*) est délivré avec un angle de phase (alpha2), lequel est différent de l'angle de phase de consigne (alpha1) afin de charger les commutateurs (S) conformément à une charge de consigne (m).

2. Procédé selon la revendication 1, selon lequel le vecteur d'espace de courant (I2*) est délivré avec une amplitude (I2) qui est différente de l'amplitude de consigne (I1).

3. Procédé selon la revendication 1 ou 2, selon lequel l'angle de phase (alpha2) et l'amplitude (I2) sont réglés de telle sorte qu'une puissance délivrée est identique à une puissance délivrée correspondant à l'angle de phase de consigne (alpha1) et à l'amplitude de consigne (I1).

4. Procédé selon l'une des revendications 1 à 3, selon lequel un écart (bêta) entre l'angle de phase (alpha2) et l'angle de phase de consigne (alpha1) est réglé en fonction de l'angle de phase de consigne (alpha1) du vecteur d'espace de courant de consigne (I1*).

5. Procédé selon la revendication 4, selon lequel l'écart (bêta) pour différents angles de phase de consigne (alpha1) est enregistré dans un diagramme caractéristique.

6. Procédé selon l'une des revendications 1 à 5, selon lequel l'angle de phase (alpha2) est réglé en fonction des pertes d'au moins l'un des commutateurs (S) commandables.

7. Procédé selon l'une des revendications 1 à 5, selon lequel l'angle de phase (alpha2) varie par palier en fonction de l'angle de phase de consigne (alpha1).

8. Procédé selon l'une des revendications 1 à 7, selon lequel l'angle de phase (alpha2) et la charge de consigne (m) sont déterminés, les valeurs ainsi déterminées sont enregistrées dans le diagramme caractéristique et l'onduleur (10) est excité en fonction des valeurs enregistrées du diagramme caractéristique.

9. Procédé selon l'une des revendications 1 à 6, selon lequel l'angle de phase (alpha2) du vecteur d'espace de courant (I2*) est déterminé en fonction des données du diagramme caractéristique et l'onduleur (10) est excité de manière correspondante et la charge de consigne (m) est déterminée en fonction des pertes d'au moins deux des commutateurs (S) commandables.

10. Procédé selon l'une des revendications 1 à 9, selon lequel le vecteur de courant (I2*) ayant l'angle de phase (alpha2) est délivré pour charger des diodes de roue libre (D) conformément à une charge de consigne (m) de l'onduleur (10).

11. Procédé selon l'une des revendications 1 à 10, selon lequel la charge de consigne (m) est déterminée en fonction des pertes maximales et minimales possibles (P_Hmax, P_Hmin) d'au moins l'un des commutateurs (SH) qui sont associés au potentiel de tension d'alimentation élevé, et en fonction des pertes maximales et minimales possibles (P_Lmax, P_Lmin) d'au moins l'un des commutateurs (SL) qui sont associés au potentiel de tension d'alimentation faible.

12. Procédé selon l'une des revendications 1 à 11, selon lequel une machine électrique (14) est excitée au moyen de l'onduleur (10) et le vecteur d'espace de courant de consigne (I1*) est déterminé en fonction d'un angle de rotor (alpha_R) de la machine électrique (14).

13. Procédé selon la revendication 12, selon lequel l'angle de phase (alpha2) et l'amplitude du vecteur d'espace de courant (I2*) sont déterminés de telle sorte qu'un couple (M) délivré par la machine électrique (14) est identique au couple (M) qui est délivré au moyen du vecteur d'espace de courant de consigne (I1*).

14. Dispositif (18) destiné à exciter un onduleur (10), notamment à exciter une machine électrique (14), l'onduleur (10) possédant une pluralité de commutateurs (S) commandables qui sont raccordés en vue de fournir un courant électrique multiphasé (IU, IV, IW) sur la base d'un vecteur d'espace de courant de consigne (I1*) ayant un angle de phase de consigne (alpha1) et une amplitude de consigne (I), notamment pour alimenter la machine électrique (14) en courant sur plusieurs phases, comprenant un contrôleur (18) qui est configuré pour exciter l'onduleur (10) de telle sorte que l'onduleur (10) adopte une pluralité d'états de commutation (V0-V7) successifs différents des commutateurs (S) afin de fournir le courant électrique (IU, IV, IW) sous la forme d'un vecteur d'espace de courant (I*),
**caractérisé en ce que**
le contrôleur (18) est configuré pour exciter l'onduleur (10) de telle sorte que le vecteur d'espace de courant (I2*) est délivré avec un angle de phase (alpha2), lequel est différent de l'angle de phase de consigne (alpha1), afin de charger les commutateurs (S) conformément à une charge de consigne (m).

15. Chaîne cinématique de véhicule automobile comprenant au moins une machine électrique (14) destinée à fournir de la puissance motrice, un onduleur (10) destiné à exciter la machine électrique (14) et comprenant un dispositif (18) destiné à exciter l'onduleur (10) selon la revendication 14.

10

$S_{HA}$   $S_{HB}$   $S_{HC}$

12

$D_{HA}$   $D_{HB}$   $D_{HC}$

16

14

$I_U$   U

$I_V$   V   M

$I_W$   W

$S_{LA}$   $S_{LB}$   $S_{LC}$

$D_{LA}$   $D_{LB}$   $D_{LC}$

18

# FIG. 1

FIG. 2

FIG. 3

FIG. 4

**FIG. 5**

EP 2 865 092 B1

**FIG. 6**

**FIG. 7**

**Phase V**

cos α-240°

$V_{Im}$

$I_1^*$

M

cos α-120°

cos α

**Phase U**

**Phase W**

## FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010000548 A2
- DE 10393516 T1
- US 5631819 A